# EUROPEAN PATENT SPECIFICATION

(11) **EP 3 633 966 B1**
(45) Date of publication and mention of the grant of the patent: **14.02.2024**
(21) Application number: 18724612.9
(22) Date of filing: 13.03.2018
(51) Int. Cl.: H04N 1/21

(54) **DOCUMENT PROCESSING METHOD INCLUDING THE ISSUING OF DIGITAL DOCUMENT COPIES WITH IMPROVED SECURITY, COMPUTER PROGRAM PRODUCT AND SYSTEM**
DOKUMENTVERARBEITUNGSVERFAHREN MIT AUSGABE VON DIGITALEN DOKUMENTENKOPIEN MIT VERBESSERTER SICHERHEIT, COMPUTERPROGRAMMPRODUKT UND -SYSTEM
PROCÉDÉ DE TRAITEMENT DE DOCUMENTS AVEC ÉMISSION DE COPIE NUMÉRIQUE DE DOCUMENT À SÉCURITÉ AMÉLIORÉE, PRODUIT PROGRAMME D'ORDINATEUR ET SYSTÈME

(30) Priority: 22.05.2017 PT 2017110085
(43) Date of publication of application: 08.04.2020
(73) Proprietor: STP2C, Consultoria e Programacão, Lda., Cascais (PT)
(72) Inventor: MARÇAL MOURA CONSTANTINO, João José, 4445-434 Ermesinde (PT)
(74) Representative: do Nascimento Gomes, Rui
(86) International application number: PCT/IB2018/051668
(87) International publication number: WO 2018/215847

(56) References cited:
- US-A1- 2004 080 786
- US-A1- 2004 160 629
- US-A1- 2014 040 014

## Description

### FIELD OF THE INVENTION

This invention falls within the scope of documents issue in computer equipment, a possible example of which is an invoice-receipt being printed in the POS (*point of sale*).

### BACKGROUND OF THE INVENTION

The closest background to this invention are the common POS, wherein for each recorded purchase a document is generated (invoice-receipt, points voucher, exchange voucher, etc.). This document can be printed on paper, this being usually the typical solution, and then it is handed-over by the seller to the buyer.

An additional solution is to keep specific information from the receipt, such as the date or the amount, for future statistical treatment by the seller.

There are more developed solutions where the receipt is generated both on paper and digitally, as is the case of the patent application with the publication number CA2893356, the digital receipt - in optical character recognition (OCR) format - being sent to the buyer by means of a portable communication device which is available to the buyer. Another example of a POS, which stores the receipt on both paper and digitally, is US 2004/080786 A1.

However, these solutions present a number of problems, not guaranteeing an additional security of the transmitted data, since the information of the document is - at any stage - treated and communicated allowing a clear access to the data of the transaction. On the other hand, and also as a consequence, the solutions according to the state of the art provide for the creation of a true copy of the document when using paper, the digital-based solutions (as is the case of the aforementioned patent application) being based on information which i) allows access to OCR (optical character recognition) information, or ii) conveys only certain transaction data, not consisting of a true copy of the document but rather of information that may be included therein (such as date, customer number or an associated amount).

### SUMMARY OF THE INVENTION

It is thus an object of the present invention to provide a method for document processing by issuing a digital copy of the document with improved safety and which addresses the drawbacks identified above.

More generally, the method of the present invention comprises, under a document printing instruction which is given in computer equipment (1), the generation of a copy of that document, the said copy consisting solely of a digital image (2).

In an advantageous embodiment of the method of this invention, the copy of the document consisting solely of a digital image (2) is subsequently stored in a database (3).

In another advantageous embodiment of the method of this invention, the database (3) is such that after a particular digital document is originally saved, it becomes a read-only file. This means that the database (3) is of the "write once / read many" type, i.e. blockchain. This confers an additional degree of data security and reliability, which is relevant in the present technical solution, allowing future access to the document.

In yet another advantageous embodiment of the method of this invention, the issue of a document in computer equipment (1) consists in sending a document printing instruction to a virtual printer driver, the said virtual printer driver thus generating a document which consists solely of a digital image (2) from the printing instruction.

The virtual printer driver provides for a transparent solution, without resorting to physical modifications of the computer equipment (1) and the configuration thereof, since upon receipt of a printing instruction from the computer equipment (1), the virtual printer driver is able to interpret this information and generate a copy of the document consisting solely of a digital image (2), thus avoiding in a simplified way the existence of document information in an interpretable format, at least without recourse to OCR tools. The instruction received in the virtual printer driver is the one that is sent to any printer, and tells the driver how to print, not indicating which information is printed. This ensures a simplified and transparent way to manage the printing of documents safely and without paper.

Preferably, the document is an invoice-receipt and the computer equipment (1) is a POS. Alternatively, the document may be a bet slip in a game such as lottery, a token for queue management systems, or a ticket. Although in these alternative solutions the security constraint is lower than in the case of an invoice-receipt in a POS, it may also play an important role (as in the case of the bet slip). Respectively, the POS will correspond to a machine that issues bet slips, an ATM, i.e. an automated teller machine, a token dispensing machine for queue management systems or a ticketing machine (such as a machine that issues train tickets ).

It is also an object of the present invention a computer program product comprising instructions for, when executed on a computer, implementing the method of this invention in any of the previously described configurations.

It is also an object of the present invention a document processing system with a digital copy of the document being issued, which implements the method described above, in any of its configurations, and comprising:
- computer equipment (1), optionally comprised of a human interface, computer means programmed with a second printer driver, and a printer,
- a computing device programmed to comprise the virtual printer driver and the queue manager and/or
- means capable of communicating under local area network or near-field wireless communications technology. Preferably, the computing device is an integral part of the computer equipment (1).

### DESCRIPTION OF THE FIGURES

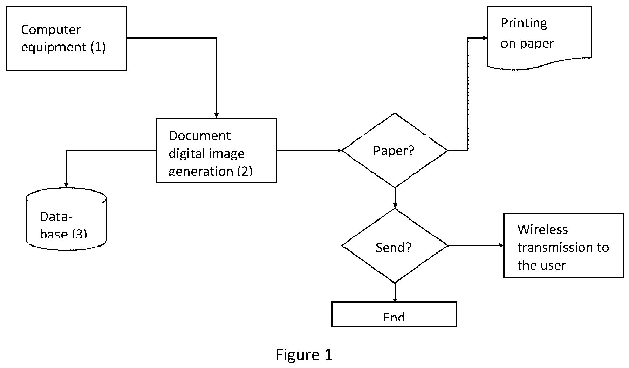

Figure 1 - represents a method for generating a copy of a document, the said copy consisting solely of a digital image (2), according to the method of the present invention. The copy is stored in a database (3) and can subsequently be printed on paper and transmitted to a user by wireless communication technology.

### DETAILED DESCRIPTION OF THE INVENTION

The more general and advantageous configurations of the present invention are described in the Summary of the Invention. Such configurations are detailed below in accordance with other advantageous and/or preferred modes of implementation of this invention.

In a preferred embodiment of the method of this invention, storing a document copy consisting solely of a digital image (2) is performed remotely via the cloud.

In another preferred embodiment of the object of this invention, under the printing instruction of at least two digital documents on one same computer equipment (1), the said remote cloud storage is performed in a queue manager using at least one priority rule, this priority rule consisting preferably of FIFO (first in first out), but may also consist of priority queue or other known method. This makes it possible to manage the consecutive issue of several documents, which could limit the speed of the issue, as it is limited by the ability to communicate with a remote device that manages the access to cloud storage. Additionally, after a confirmation of correct saving of the record in the database (3), wherein it can no longer be modified (blockchain database case (3)), the queue manager removes the relevant document from the queue, deleting the file and any associated certification code from any local memory of the computer equipment (1).

In another preferred embodiment of the method of this invention, combinable with any one of those previously described, the document consisting solely of a digital image (2) is additionally and subsequently transmitted to a buyer/user by wireless local area network or proximity communications technology. This technology is preferably in compliance with ISO/IEC 18092 standard, commercially known as Near Field Communication (NFC), and/or in compliance with IEEE 802.15.1 standard, commercially known as Bluetooth.

In another embodiment of the method of this invention, combinable with any of those previously described, for each issue of a document and consequent generation of a copy of that document consisting solely of a digital image (2), a certification code is generated, preferably including a digital key, the date and time of the document.

In still another embodiment of the method of this invention, the printing of a digital document is performed by means of an image file generated from the raw data of said printing instruction.

In another configuration of the method of this invention, under the printing instruction of a digital document in computer equipment (1), a second copy of the paper document is additionally printed, this second copy being:
- identical to the copy consisting solely of a digital image (2) and
- generated by a second printer driver and
preferably, the said second copy being printed on paper after insertion via the human interface of a paper printing instruction.

This makes it possible to control printing on paper.

In a preferred configuration of the computer program product of this invention, it consists of a virtual printer driver, preferably loaded and/or executed in a computing device.

### EMBODIMENTS OF THE INVENTION

In one embodiment of the object of the present invention, a POS with physical printer and with Internet access has installed a virtual printer driver that implements the generation of copies of documents, e.g. invoice-receipt, each one of those copies consisting solely of a digital image (2).

The POS, under the issue of a document which is triggered by a seller upon purchase by a buyer, gives a printing instruction to its printer drivers, of which the one referred to above.

Upon the said instruction, it is thus generated a copy consisting solely of a digital image (2) generated by the virtual printer driver, the copy being sent to the queue manager, which in its turn manages in a FIFO scheme the cloud storage of the copy that consists solely of a digital image (2).

On the other hand, and in a human interface of the POS, the seller instructs the POS about whether an instruction to print a copy of the paper document can be sent to the second printer driver - connected to the physical printer.

In addition, the POS has associated proximity communication means, such as with NFC and/or Bluetooth technology, which enable the user, in close proximity to these means of communication of a device with NFC and/or Bluetooth communication capability, to access to the copy of the document consisting solely of a digital image (2).

The person skilled in the art will understand the present invention as not limited to the configurations and embodiments described herein, but by the scope of the following claims.

## Claims

1. A method for the processing of a digital document with generation of a digital copy of the digital document with improved security, wherein upon a printing instruction of a digital document in a computer equipment (1), a digital copy of the said digital document is generated, the said digital copy of the digital document consisting solely of a digital image file (2), wherein the printing instruction of the digital document in a computer equipment (1) comprises sending an instruction for printing the digital document to a virtual printer driver, wherein:
- the instruction received in the virtual printer driver contains information to the driver of how to print and does not indicate which document information in a computer interpretable format is to be printed by said virtual printer driver, and
- the virtual printer driver thus generates a digital copy of the digital document which consists solely of a digital image (2) from the instruction for printing,
the printing of a digital copy of the digital document is performed by generating a digital image file from raw data of said instruction for printing,
and wherein the digital copy of the digital document which consists solely of a digital image file (2) is subsequently stored in a database (3),
and wherein the database (3) is such that, after a given digital copy of a digital document is saved, only reading will be allowed,
and wherein a digital copy of the document is stored remotely and,
after a confirmation of correct saving of the digital copy in the database (3), wherein it can no longer be modified, a queue manager removes the relevant digital copy from a queue, deleting the digital document and any associated certification code from any local memory of the computer equipment (1),
wherein, under the instruction for printing at least two digital documents on a same computer equipment (1), the said remote storage is performed in the queue manager using at least one priority rule.

2. A method according to any of the previous claims, **characterized in that** the digital document is an invoice-receipt, a bet slip in a game such as lottery, a token for queue management systems, or a ticket and the computer equipment (1) is, respectively, a POS, an automated teller machine, a token dispensing machine for queue management systems or a ticketing machine.

3. A method according to any of the previous claims, **characterized in that** the digital document consisting solely of a digital image file (2) is additionally and subsequently transmitted to a user by wireless local area network or proximity communications technology.

4. A method according to any of the previous claims, **characterized in that** for each emission of a document and consequent generation of a copy of that digital document consisting solely of a digital image file (2), a certification code is generated, preferably including a digital key, the date and time of the document.

5. A method according to any of the previous claims **characterized in that**, under the printing instruction of a digital document in computer equipment (1), a second copy of the paper document is additionally generated, this second copy being:
- identical to the copy consisting solely of a digital image file (2) and
- generated by a second printer driver and
preferably, the said second copy being generated on paper after insertion via the human interface of a paper printing instruction.

6. A computer program product that comprises instructions for, when executed on a computer equipment (1) and on a virtual printer driver, implementing the method of any of the claims 1-2.

7. A computer program product according to the previous claim, that is loaded and/or executed in a computer equipment (1) and on a virtual printer driver.

8. A system for the processing of documents with emission of a digital copy of a digital document, that implements the method of any of the claims 1-5, comprising:
- a computer equipment (1), optionally comprising a human interface, computer means programmed with a second printer driver, and a printer, the computer equipment being configured to sending the instruction for printing the document to a virtual printer driver,
- a computing device programmed to comprise the virtual printer driver and the queue manager, wherein it is configured to generate the said digital document which consists solely of a digital image file (2) from the instruction for printing,
- a database (3) configured for the said subsequent storage, and/or
- means with the ability of communicating under a local area network or proximity wireless communications technology.

9. A system according to the previous claim, wherein the computing device is an integral part of the computer equipment (1).

## Patentansprüche

1. Verfahren zur Verarbeitung eines digitalen Dokuments mit Erzeugung einer digitalen Kopie des digitalen Dokuments mit verbesserter Sicherheit, bei dem auf einen Druckanweisung eines digitalen Dokuments in einer Computerausrüstung (1) hin eine digitale Kopie des digitalen Dokuments erzeugt wird, wobei die digitale Kopie des digitalen Dokuments ausschließlich aus einer digitalen Bilddatei (2) besteht, wobei der Druckanweisung des digitalen Dokuments in einer Computerausrüstung (1) das Senden eines Anweisung zum Drucken des digitalen Dokuments an einen virtuellen Druckertreiber umfasst, wobei:
- die in dem virtuellen Druckertreiber empfangene Anweisung Informationen für den Treiber enthält, wie zu drucken ist, und nicht angibt, welche Dokumentinformationen in einem computerinterpretierbaren Format durch den virtuellen Druckertreiber zu drucken sind, und
- der virtuelle Druckertreiber also aus der Anweisung zum Drucken eine digitale Kopie des digitalen Dokuments, die ausschließlich aus einem digitalen Bild (2) besteht, erzeugt,
der Druck einer digitalen Kopie des digitalen Dokuments durch Erzeugung einer digitalen Bilddatei aus den Rohdaten der Anweisung zum Drucken erfolgt,
und wobei die digitale Kopie des digitalen Dokuments, die ausschließlich aus einer digitalen Bilddatei (2) besteht, anschließend in einer Datenbank (3) gespeichert wird,
und wobei die Datenbank (3) so beschaffen ist, dass nach dem Speichern einer bestimmten digitalen Kopie eines digitalen Dokuments nur noch das Lesen erlaubt ist, und wobei eine digitale Kopie des Dokuments aus der Ferne gespeichert wird und,
nach einer Bestätigung der korrekten Speicherung der digitalen Kopie in der Datenbank (3), in der sie nicht mehr geändert werden kann, entfernt ein Warteschlangenmanager die betreffende digitale Kopie aus einer Warteschlange, wobei das digitale Dokument und jeder zugehörige Zertifizierungscode aus dem lokalen Speicher der Computerausrüstung (1) gelöscht wird,
bei dem im Rahmen der Anweisung zum Drucken von mindestens zwei digitalen Dokumenten auf ein und demselben Computerausrüstung (1) die genannte Fernspeicherung in der Warteschlangenverwaltung unter Verwendung mindestens einer Prioritätsregel erfolgt.

2. Verfahren nach einem der vorhergehenden Ansprüche, **dadurch gekennzeichnet, dass es** sich bei dem digitalen Dokument um einen Rechnungsbeleg, einen Wettschein für ein Spiel wie eine Lotterie, ein Token für Warteschlangenmanagementsysteme oder einen Fahrschein handelt und dass es sich bei der Computerausrüstung (1) um eine Verkaufsstelle, einen Geldautomaten, einen Wertmarkenausgabeautomaten für Warteschlangenmanagementsysteme bzw. einen Fahrkartenautomaten handelt.

3. Verfahren nach einem der vorhergehenden Ansprüche, **dadurch gekennzeichnet, dass** das digitale Dokument, das ausschließlich aus einer digitalen Bilddatei (2) besteht, zusätzlich und anschließend an einen Benutzer über ein drahtloses lokales Netzwerk oder eine Proximity-Kommunikationstechnologie übertragen wird.

4. Verfahren nach einem der vorhergehenden Ansprüche, **dadurch gekennzeichnet, dass** für jede Emission eines Dokuments und die anschließende Erzeugung einer Kopie dieses digitalen Dokuments, die ausschließlich aus einer digitalen Bilddatei (2) besteht, ein Zertifizierungscode erzeugt wird, der vorzugsweise einen digitalen Schlüssel, das Datum und die Uhrzeit des Dokuments enthält.

5. Verfahren nach einem der vorhergehenden Ansprüche, **dadurch gekennzeichnet, dass** unter der Druckanweisung eines digitalen Dokuments in der Computerausrüstung (1) zusätzlich ein zweites Kopie des Papierdokuments erzeugt wird, wobei dieses zweite Kopie ist:
- identisch mit der Kopie, die ausschließlich aus einer digitalen Bilddatei (2) besteht, und
- von einem zweiten Druckertreiber erzeugt und
vorzugsweise wird die zweite Kopie auf Papier erstellt, nachdem über die menschliche Schnittstelle eine Papierdruckanweisung eingegeben wurde.

6. Computerprogrammprodukt, das Anweisungen enthält, um bei Ausführung auf einer Computerausrüstung (1) und auf einem virtuellen Druckertreiber das Verfahren nach einem der Ansprüche 1-2 zu implementieren.

7. Computerprogrammprodukt nach dem vorhergehenden Anspruch, das in einer Computerausrüstung (1) und auf einen virtuellen Druckertreiber geladen und/oder ausgeführt wird.

8. System zur Verarbeitung von Dokumenten mit Emission einer digitalen Kopie eines digitalen Dokuments, das das Verfahren nach einem der Ansprüche 1-5 umsetzt, umfassend:
- einer Computerausrüstung (1), die optional eine menschliche Schnittstelle, Computermittel, die mit einem zweiten Druckertreiber programmiert sind, und einen Drucker umfasst, wobei die Computerausrüstung konfiguriert ist, um die Anweisung zum Drucken des Dokuments an einen virtuellen Druckertreiber zu senden,
- ein Computergerät, die so programmiert ist, dass sie den virtuellen Druckertreiber und den Warteschlangenmanager umfasst, wobei sie so konfiguriert ist, dass sie das digitale Dokument, das ausschließlich aus einer digitalen Bilddatei (2) besteht, aus der Anweisung zum Drucken erzeugt,
- eine Datenbank (3), die für die genannte spätere Speicherung konfiguriert ist, und/oder
- Mittel mit der Fähigkeit, über ein lokales Netz oder eine drahtlose Proximity-Kommunikationstechnologie zu kommunizieren.

9. System nach dem vorhergehenden Anspruch, wobei das Computergerät ein integraler Bestandteil der Computerausrüstung (1) ist.

## Revendications

1. Procédé de traitement d'un document numérique avec génération d'une copie numérique du document numérique avec une sécurité améliorée, dans lequel, suivant une instruction d'impression d'un document numérique dans un équipement informatique (1) une copie numérique dudit document numérique est générée, ladite copie numérique du document numérique consistant uniquement en un fichier image numérique (2), dans lequel l'instruction d'impression du document numérique dans un équipement informatique (1) comprend l'envoi d'une instruction d'impression du document numérique à un pilote d'imprimante virtuelle, dans lequel :
- l'instruction reçue dans le pilote d'imprimante virtuelle contient des informations destinées au pilote sur la manière d'imprimer et n'indique pas quelle information du document dans un format interprétable par un ordinateur doit être imprimé par ledit pilote d'imprimante virtuelle, et
- le pilote d'imprimante virtuelle génère ainsi une copie numérique du document numérique qui consiste uniquement en une image numérique (2) à partir de l'instruction d'impression,
l'impression d'une copie numérique du document numérique est effectuée en générant un fichier image numérique à partir des données brutes de ladite instruction d'impression,
et dans lequel la copie numérique du document numérique qui consiste uniquement en un fichier image numérique (2) est ensuite stockée dans une base de données (3),
et dans lequel la base de données (3) est telle qu'après l'enregistrement d'une certaine copie numérique d'un document numérique, seule la lecture est autorisée,
et dans lequel une copie numérique du document est stockée à distance et,
après confirmation de l'enregistrement correct de la copie numérique dans la base de données (3), dans laquelle elle ne peut plus être modifiée, un gestionnaire de file d'attente retire la copie numérique concernée d'une file d'attente, supprimant le document numérique et tout code de certification associé de toute mémoire locale de l'équipement informatique (1),
dans lequel, dans le cadre de l'instruction d'impression d'au moins deux documents numériques sur un même équipement informatique (1), ledit stockage à distance est effectué dans le gestionnaire de file d'attente à l'aide d'au moins une règle de priorité.

2. Procédé selon l'une quelconque des revendications précédentes, **caractérisé par le fait que** le document numérique est une facture avec reçu, un bulletin de pari dans un jeu tel que la loterie, un jeton pour les systèmes de gestion des files d'attente, ou un billet, et que l'équipement informatique (1) est, respectivement, un point de vente, un distributeur automatique de billets, un distributeur de jetons pour les systèmes de gestion des files d'attente, ou un distributeur de billets.

3. Procédé selon l'une quelconque des revendications précédentes, **caractérisé par le fait que** le document numérique qui consiste uniquement en un fichier image numérique (2) est en outre et ultérieurement transmis à un utilisateur par un réseau local sans fil ou une technologie de communication de proximité.

4. Procédé selon l'une quelconque des revendications précédentes, **caractérisé par le fait que** pour chaque émission d'un document et la génération résultante d'une copie de ce document numérique qui consiste uniquement en un fichier d'image numérique (2), un code de certification est généré, comprenant de préférence une clé numérique, la date et l'heure du document.

5. Procédé selon l'une quelconque des revendications précédentes, **caractérisé par le fait que** lors de l'instruction d'impression d'un document numérique dans l'équipement informatique (1), une deuxième copie du document papier est également générée, cette deuxième copie étant :
- identique à la copie qui consiste uniquement en un fichier image numérique (2) et
- générée par un second pilote d'imprimante et
de préférence, ladite deuxième copie est générée sur papier après l'insertion, via l'interface humaine, d'une instruction d'impression sur papier.

6. Produit programme d'ordinateur comprenant des instructions pour, lorsqu'il est exécuté sur un équipement informatique (1) et sur un pilote d'imprimante virtuelle, mettre en oeuvre le procédé de l'une quelconque des revendications 1 à 2.

7. Produit programme d'ordinateur selon la revendication précédente, lequel est chargé et/ou exécuté dans un équipement informatique (1) et sur un pilote d'imprimante virtuelle.

8. Système de traitement de documents avec émission d'une copie numérique d'un document numérique, lequel met en oeuvre le procédé de l'une quelconque des revendications 1 à 5, comprenant :
- un équipement informatique (1), comprenant éventuellement une interface humaine, des moyens informatiques programmés avec un second pilote d'imprimante, et une imprimante, l'équipement informatique étant configuré pour envoyer l'instruction d'impression du document à un pilote d'imprimante virtuel computer,
- un dispositif informatique programmé pour comprendre le pilote d'imprimante virtuelle et le gestionnaire de file d'attente, dans lequel il est configuré pour générer ledit document numérique qui consiste uniquement en un fichier image numérique (2) à partir de l'instruction d'impression,
- une base de données (3) configurée pour ledit stockage ultérieur, et/ou
- des moyens avec la capacité de communiquer dans le cadre d'un réseau local ou d'une technologie de communication sans fil de proximité.

9. Système selon la revendication précédente, dans lequel le dispositif informatique fait partie intégrante de l'équipement informatique (1).
